# FASCICULE DE BREVET EUROPEEN

(11) **EP 3 472 458 B1**
(45) Date de publication et mention de la délivrance du brevet: **08.07.2020**
(21) Numéro de dépôt: 17732509.9
(22) Date de dépôt: 29.05.2017
(51) Int. Cl.: F03D 13/25, B63B 35/44, B63B 1/12

(54) **DISPOSITIF FLOTTANT SUPPORT D'EOLIENNE OFFSHORE ET ENSEMBLE EOLIEN FLOTTANT CORRESPONDANT**
SCHWIMMENDE VORRICHTUNG ZUM TRAGEN EINER OFFSHORE-WINDTURBINE UND ENTSPRECHENDE SCHWIMMENDE WINDTURBINENEINHEIT
FLOATING DEVICE SUPPORTING AN OFFSHORE WIND TURBINE, AND CORRESPONDING FLOATING WIND TURBINE UNIT

(30) Priorité: 20.06.2016 FR 1655714
(43) Date de publication de la demande: 24.04.2019
(73) Titulaire: Ceteal, 94240 L'Hay Les Roses (FR)
(72) Inventeur: GATESOUPE, Julien, 56520 Guidel (FR); HEISEL, Pascal, 90350 Evette-Salbert (FR); MARIN, Yves, 44400 Reze (FR)
(74) Mandataire: Novagraaf Technologies
(86) Numéro de dépôt international: PCT/FR2017/051335
(87) Numéro de publication internationale: WO 2017/220878

(56) Documents cités:
- WO-A1-2015/048147
- WO-A2-2004/061302
- WO-A2-2011/137903
- JP-A- 2015 519 489

## Description

### 1. Domaine de l'invention

L'invention concerne le domaine de l'éolien flottant. Elle concerne plus particulièrement un dispositif flottant destiné à supporter une éolienne en mer et un ensemble éolien flottant comportant ledit dispositif et une éolienne.

### 2. Art antérieur

Des ensembles éoliens flottants, comportant un dispositif flottant et une éolienne en mer supportée par le dispositif flottant, sont connus. L'éolienne comprend un mât et une turbine. Parmi ces ensembles éoliens, on compte par exemple HYWIND™, WINDFLOAT™, IDEOL™.

Une des difficultés principales rencontrées par les dispositifs flottants destinés à supporter une éolienne en mer est la capacité à supporter les charges de fatigue, dues aux mouvements répétitifs imposés à l'ensemble éolien flottant notamment par la turbine, le vent et la houle, et les charges extrêmes générées en cas de forte mer. Un désavantage des dispositifs flottants actuels est qu'ils sont conçus en matériaux qui ne sont pas particulièrement résistants aux charges de fatigues et aux charges extrêmes. En effet, ils sont classiquement conçus en métal et en particulier en acier. Le dimensionnement de telles structures pour résister aux charges de fatigues et aux charges extrêmes précédemment citées conduit donc à des structures volumineuses, lourdes et coûteuses.

Il en résulte un processus de fabrication de ces structures complexe et coûteux. En particulier, étant donné l'encombrement de ces structures, des cales sèches de grande taille sont nécessaires pour leur fabrication.

Ces différents désavantages limitent notamment la puissance des éoliennes que peuvent supporter les dispositifs flottants de tels ensembles.

Les ensembles flottants actuels sont pénalisés non seulement par l'utilisation de matériaux qui ne sont pas particulièrement résistants à la fatigue, mais également par le choix d'une géométrie qui ne limite pas de manière optimale la génération de nouvelles charges s'exerçant sur l'ensemble. Les charges générées sont par exemple des charges gravitaires liées à l'inclinaison du mât de l'éolienne par rapport à la direction verticale, des charges inertielles liées aux mouvements du mât de l'éolienne autour de sa position au repos ou des charges résultant de la pression hydrostatique s'exerçant sur les parois du dispositif flottant.

Par ailleurs, les ensembles éoliens flottants actuels utilisent couramment des éléments présentant des volumes pleins pour résister aux charges de fatigue et aux charges extrêmes. Cependant, ces volumes pleins ne concourent pas à la flottabilité globale du système, ce qui nécessite à la fois d'augmenter le dimensionnement des éléments flottants pour augmenter leur flottabilité et d'augmenter le dimensionnement global du système pour supporter les efforts de flexion qui se transmettent entre les éléments flottants et les éléments non flottants. Un autre exemple dans l'art antérieur est divulgué par WO2004061302.

### 3. Objectifs de l'invention

L'invention propose une solution visant à pallier les inconvénients précités.

Ainsi, l'objectif premier de l'invention est de supporter les charges de fatigue et les charges extrêmes qui s'exercent sur le dispositif flottant tout en limitant la génération de nouvelles charges notamment sur la turbine. Ceci est assuré par l'utilisation de plusieurs matériaux utilisés chacun pour leurs avantages du point de vue mécanique et placés à des endroits particuliers de la structure afin de reprendre dans les meilleures conditions les efforts transmis à la fois par la turbine, par l'intermédiaire du mât fixé sur le dispositif flottant, et par l'environnement marin. Ceci est également assuré par la géométrie des différents éléments de sorte à limiter la génération de nouvelles charges et à conférer une flottabilité neutre ou positive aux éléments.

Un autre objectif de l'invention est de garder un comportement similaire quelles que soient les orientations des perturbations environnementales, comme le vent, le courant ou la houle, grâce à des symétries de formes ouvrant des possibilités élargies vis-à-vis des sites d'installation. L'invention confère une flexibilité vis-à-vis des sites d'installation d'autant plus grande qu'elle permet d'obtenir un ensemble éolien flottant avec un tirant d'eau relativement faible par rapport à l'existant ce qui favorise le transport et l'installation d'un tel ensemble.

Un objectif de l'invention est également d'obtenir un dispositif flottant présentant un encombrement faible, notamment par rapport aux dispositifs existants destinés à supporter des turbines de forte puissance. En corollaire de cet objectif, l'invention vise à proposer un dispositif flottant rapidement adaptable à l'utilisation de turbines présentant une puissance supérieure à celle des turbines actuellement utilisées dans les ensembles éoliens flottants, sans modifier l'architecture du dispositif flottant.

### 4. Résumé de l'invention

Les caractéristiques liées à l'orientation dans l'espace sont données dans tout le document lorsque l'ensemble flottant flotte sur une masse aquatique au repos, c'est-à-dire de surface horizontale en l'absence de vent, de courant et de houle. La direction verticale est définie par la direction de la pesanteur, le champ de la pesanteur pointant vers le bas. Toute direction orthogonale à la direction verticale est horizontale.

L'invention concerne un dispositif flottant destiné à supporter une éolienne en mer et comportant :
- une colonne centrale flottante agencée pour recevoir fixement un mât de l'éolienne,
- au moins trois flotteurs périphériques,
- un bras par flotteur, chaque bras s'étendant selon une direction d'élongation radiale par rapport à la colonne centrale et chaque bras comportant une extrémité proximale fixée à la colonne centrale et une extrémité distale fixée audit flotteur,
le dispositif étant caractérisé en ce que les bras comportent :
- un élément tubulaire externe s'étendant selon la direction d'élongation du bras et de section courbe perpendiculairement à la direction d'élongation, et
- un élément tubulaire interne s'étendant selon la direction d'élongation du bras et de section polygonale perpendiculairement à la direction d'élongation, la section polygonale étant inscrite dans la section courbe.
L'emboîtement de l'élément tubulaire interne de section polygonale dans l'élément tubulaire externe de section courbe permet une bonne répartition des efforts et donc une bonne tenue mécanique. L'élément tubulaire interne, grâce à sa section polygonale, permet de reprendre la flexion dans le plan, engendrée par la poussée du vent sur la turbine, et la flexion alternée dans le plan, induite par les mouvements de roulis, tangage et de pilonnement. L'élément tubulaire externe, grâce à sa section délimitée par une courbe fermée, permet de transmettre les efforts de pression externe en compression le long de l'élément tubulaire externe. En outre, la coque de l'élément tubulaire externe et la coque de l'élément tubulaire interne forment une double coque, ce qui réduit les risques d'infiltration et augmente donc la sécurité du dispositif flottant. Le caractère creux et volumineux des bras apporte de la flottabilité.

Selon un mode de réalisation particulier, les bras comportent des compartiments aptes à être remplis au moins partiellement de ballast de sorte à ajuster la flottabilité des bras afin d'éviter l'apparition d'efforts de flexion supplémentaires indésirables à cause de trop grandes disparités de flottabilité.

Selon un mode de réalisation particulier, le dispositif flottant comporte en outre au moins deux pièces de liaison par paire de bras adjacents, chaque pièce de liaison comportant une première et une deuxième extrémités fixées respectivement à proximité des extrémités distales des premier et deuxième bras de ladite paire de bras adjacents. Les pièces de liaison assurent une continuité mécanique entre les bras pour limiter les moments hors plan générateurs de flexion déviée.

Selon un mode de réalisation particulier, les bras s'étendent horizontalement. Ce mode de réalisation est préférable en particulier lorsque la ligne de flottaison traverse le bras. En effet, dans ce cas, des efforts supplémentaires sont susceptibles d'apparaître si les bras ne sont pas horizontaux.

Selon un mode de réalisation particulier, des plans radiaux étant définis chacun par la direction d'élongation d'un bras et par une direction verticale, le dispositif est agencé de sorte que les plans radiaux sont des plans de symétrie du dispositif. Cette configuration symétrique permet de garder un comportement similaire quelles que soient les orientations des perturbations environnementales, comme le vent, le courant ou la houle, de sorte à élargir le champ des sites d'installation possibles.

Selon un mode de réalisation particulier, le dispositif flottant comporte quatre flotteurs périphériques. Ce nombre de quatre flotteurs permet un bon compromis entre l'encombrement et les performances hydrostatiques de l'ensemble éolien flottant, c'est-à-dire qu'il permet d'avoir une bonne flottabilité malgré une longueur de bras relativement réduite.

Selon un mode de réalisation particulier, les flotteurs périphériques comportent des cloisons intérieures. Le cloisonnement permet d'assurer la stabilité de l'ensemble du flotteur en cas d'avarie, par exemple avec un compartiment rempli d'eau.

Selon un mode de réalisation particulier, la colonne centrale comporte une pièce de fixation comprenant un volume creux destiné à recevoir le mât de l'éolienne, le volume creux étant cylindrique ou tronconique de sorte à épouser la forme du mât. La forme du mât de l'éolienne n'étant pas standard, la pièce de fixation permet d'adapter un même dispositif flottant sur plusieurs types d'éolienne.

Selon un mode de réalisation particulier, la colonne centrale est creuse de sorte à avoir une flottabilité suffisante pour supporter l'éolienne. Ceci permet d'éviter l'apparition d'efforts de flexion supplémentaires indésirables à cause de trop grandes disparités de flottabilité.

Selon un mode de réalisation particulier, la colonne centrale présente, horizontalement, une section polygonale dont le nombre de côtés est égal au double du nombre de bras de sorte que les bras sont respectivement fixés à des côtés de la section polygonale non adjacents entre eux. Cette géométrie permet d'atteindre un ratio poids/volume favorisant la flottabilité de la colonne centrale.

Selon un mode de réalisation particulier, les flotteurs comportent une portion inférieure tronconique d'axe vertical et une portion supérieure cylindrique d'axe vertical. La forme des flotteurs permet d'apporter un volume de flottabilité important et une bonne résistance mécanique aux efforts hydrostatiques. En particulier, l'objectif principal recherché est de limiter les mouvements, accélérations et efforts sur la turbine grâce à un amortissement important.

Selon un mode de réalisation particulier, le dispositif flottant est réalisé, au moins partiellement, en béton armé. Le béton présente une très bonne résistance en fatigue et aux environnements extrêmes. Il permet également d'éviter les phénomènes de concentration de contraintes au niveau de soudures, en particulier pour des connexions complexes de type « gueule de loup », très coûteuses en acier. Le béton permet en outre de réaliser des éléments présentant des dimensions importantes, notamment en ce qui concerne les flotteurs. Les flotteurs de grande taille permettent de réduire l'assiette globale de l'ensemble tout en conservant une bonne flottabilité car ils permettent de réduire la longueur des bras. Le béton présente également l'avantage d'être moins cher que l'acier en utilisation standard.
Selon un mode de réalisation particulier, le dispositif flottant comporte des portions en acier, par exemple les pièces de renfort. L'acier résiste aux efforts de traction contrairement au béton donc l'acier est particulièrement indiqué pour les pièces de renfort qui travaillent principalement en traction. En outre, l'acier étant un matériau relativement léger, il permet de limiter la masse additionnelle due aux pièces de renfort.

Selon un mode de réalisation particulier, le dispositif flottant comporte en outre un système d'ancrage.

L'invention concerne également un ensemble éolien flottant comportant :
- un dispositif selon l'une quelconque des revendications précédentes, et
- une éolienne.

### 5. Liste des figures

D'autres caractéristiques et avantages innovants ressortiront de la description ci-après, fournie à titre indicatif et nullement limitatif, en référence aux dessins annexés, dans lesquels :
- La figure 1 représente une vue de face d'un ensemble éolien flottant selon l'invention,
- La figure 2 représente une vue en perspective de côté de l'ensemble éolien flottant de la figure 1,
- La figure 3 représente une vue en perspective de dessous de l'ensemble éolien flottant des figures 1 et 2,
- La figure 4 représente une vue en perspective d'un dispositif flottant selon l'invention,
- La figure 5 représente une vue de dessous du dispositif flottant de la figure 4,
- La figure 6 représente une vue éclatée et partielle du dispositif flottant des figures 4 et 5,
- La figure 7 représente une vue en coupe verticale d'un bras du dispositif des figures 4 à 6,
- Les figures 8a et 8b représentent schématiquement la transmission des efforts de flexion d'une éolienne vers un bras dans un ensemble éolien flottant selon l'invention,
- La figure 9 représente schématiquement la transmission des efforts de compression dans un bras d'un dispositif flottant selon l'invention.

### 6. Description détaillée

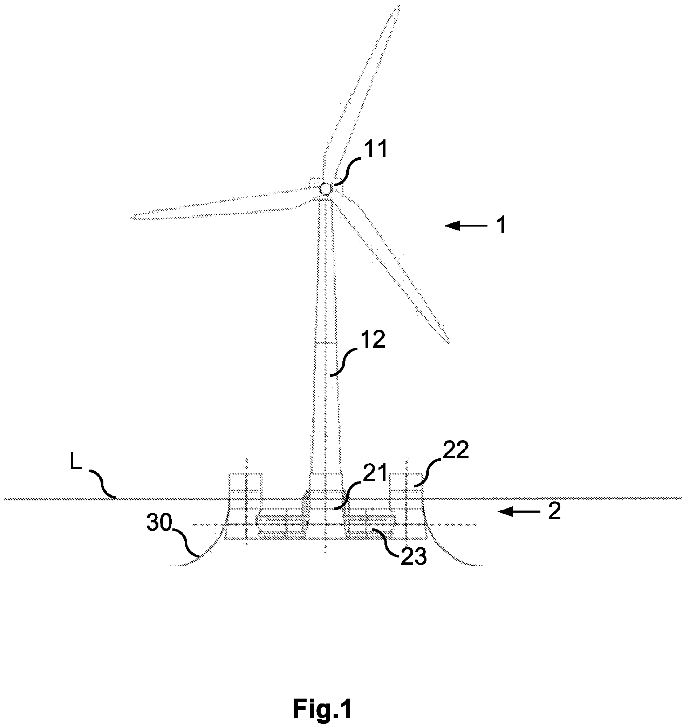

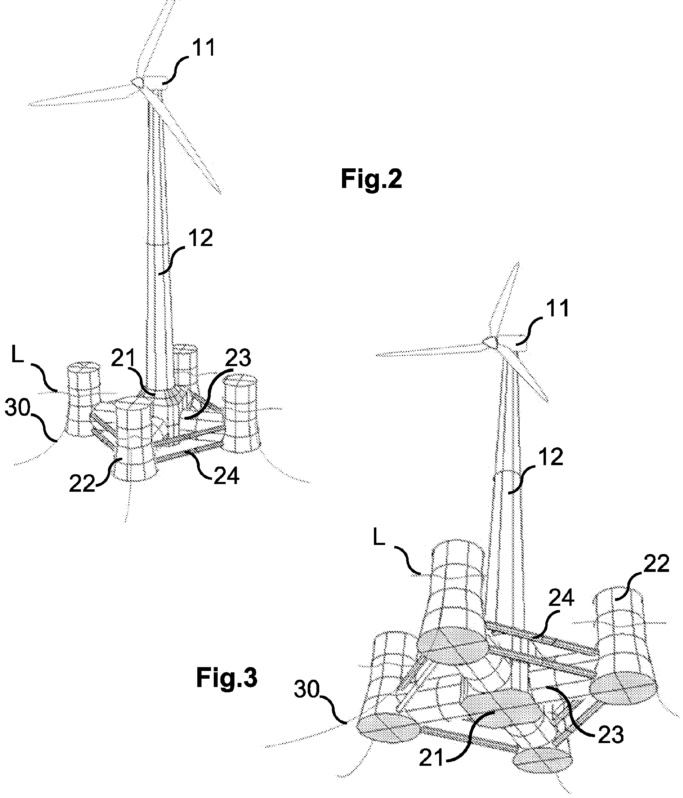

Aux figures 1 à 3 est représenté un ensemble éolien flottant selon l'invention. L'ensemble éolien flottant comporte une éolienne 1 et un dispositif flottant 2 destiné à supporter l'éolienne 1.

L'éolienne 1 comporte une turbine 11 et un mât 12 supportant la turbine 11. La turbine 11 est adaptée à une utilisation offshore et présente une puissance de plusieurs mégawatts. De préférence, il s'agit d'une turbine à axe horizontal et tripale. Le mât 12 est constitué d'éléments cylindriques avantageusement réalisés en acier sans raidissage longitudinal. La portion supérieure du mât 12 est agencée pour recevoir la turbine 11.

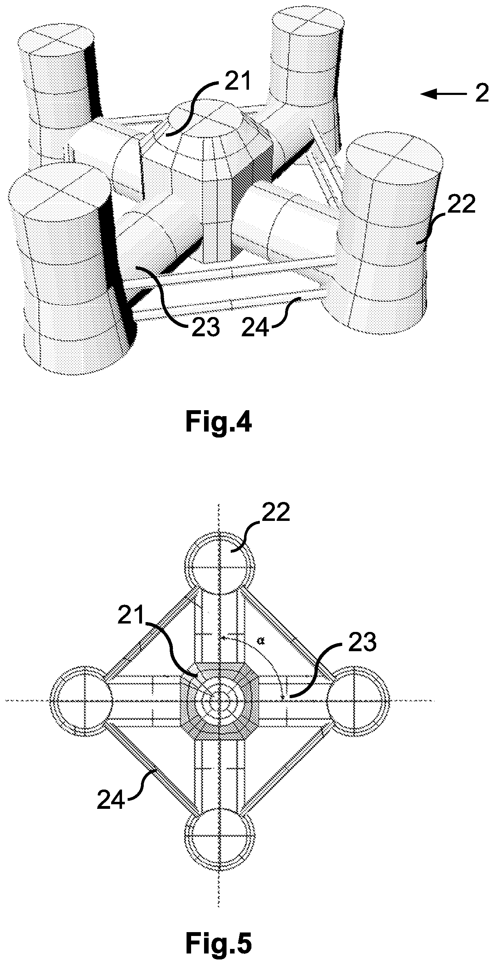

En référence à la figure 4, le dispositif flottant 2 comporte une colonne centrale 21 flottante agencée pour recevoir le mât 12, au moins trois flotteurs 22 périphériques, un bras 23 par flotteur et avantageusement au moins deux pièces de liaison 24 par paire de bras 23 adjacents.

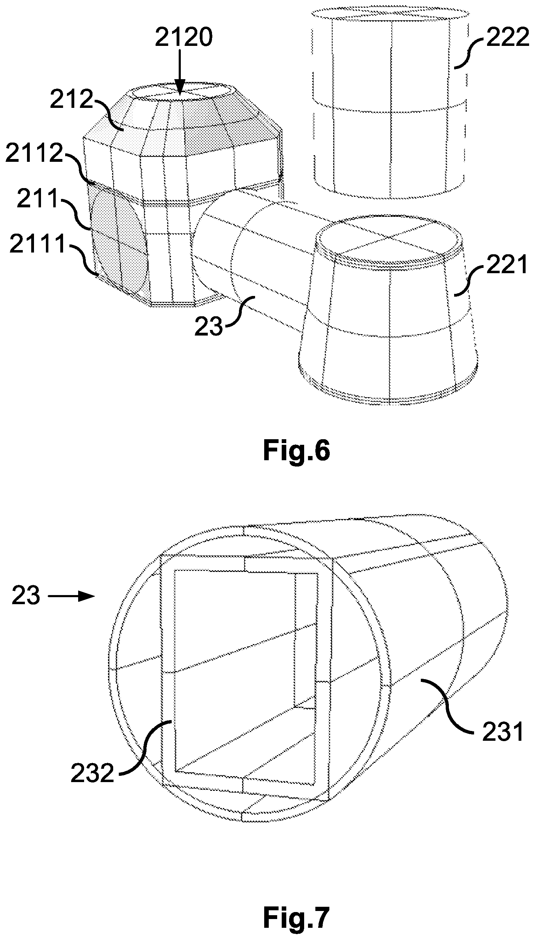

En référence à la figure 6, la colonne centrale 21 comporte un tronc 211 présentant une forme de prisme droit de génératrice verticale. Le tronc 211 comporte une face inférieure 2111 et une face inférieure 2112 polygonales. La face inférieure 2111 et la face inférieure 2112 sont horizontales. La face inférieure 2111 comprend une dalle sur laquelle repose la base du mât 12 de l'éolienne 1. En outre, la colonne centrale 21 comporte une pièce de fixation 212 comprenant un volume creux 2120 destiné à recevoir le mât 12 de l'éolienne 1, le volume creux 2120 étant cylindrique ou tronconique de sorte à épouser la forme du mât 12. La pièce de fixation 212 est de préférence une pièce en acier fixée à l'intérieur de la colonne centrale 21. Par exemple, la colonne centrale 21 étant en béton, la pièce de fixation 212 est prise dans le béton de la colonne. La pièce de fixation 212 est adaptée à l'éolienne 1 que le dispositif flottant 2 est destiné à recevoir. En revanche, le reste du dispositif flottant 2 est conçu de sorte à être apte à recevoir une grande diversité d'éoliennes.

La colonne centrale 21 est creuse pour apporter la flottabilité nécessaire à supporter l'éolienne 1. La colonne centrale 21 comporte des compartiments aptes à être remplis au moins partiellement de ballast. Le ballast est par exemple de l'eau de mer ou un autre matériau solide, liquide ou granuleux, plus dense que l'eau de mer, permettant d'ajuster la masse de l'ensemble du système afin de régler le tirant d'eau pour des opérations à quai, des opérations de transit ou une installation sur site. Dans le cas de ballast liquide, des moyens d'ajustement adaptés sont par exemple des moyens de pompage de liquide permettant d'ajouter ou de retirer du ballast au sein des compartiments aptes au ballastage.

Selon un mode de réalisation préféré, la colonne centrale 21 est réalisée au moins partiellement en béton armé afin de résister aux sollicitations cycliques de fatigue générées notamment par les mouvements de l'éolienne 1.

Selon un mode de réalisation particulier, la colonne centrale 21 est réalisée au moins partiellement en acier bien que l'acier résiste moins bien à la fatigue que le béton.

Les flotteurs 22 périphériques comportent une portion inférieure tronconique 221 et une portion supérieure cylindrique 222. La portion inférieure tronconique 221 et la portion supérieure cylindrique 222 s'étendent selon un axe vertical. Ici, l'axe vertical est un axe de symétrie de révolution des flotteurs. A l'interface entre la portion inférieure tronconique 221 et la portion supérieure cylindrique 222, le diamètre des deux portions est identique. L'interface entre la portion inférieure tronconique 221 et la portion supérieure cylindrique 222 est matérialisée par une dalle. La portion tronconique s'évase vers le bas de sorte à apporter un meilleur amortissement hydrodynamique pour améliorer le comportement dynamique de la plateforme. La base inférieure de la portion tronconique est matérialisée par une dalle. De préférence, dans la portion tronconique, le diamètre de la base inférieure est supérieur à la hauteur.

La géométrie des flotteurs 22 permet d'apporter un volume de flottabilité important et une résistance mécanique aux efforts hydrostatiques. Dans un mode de réalisation préféré, la ligne de flottaison L se situe au niveau de la partie cylindrique des flotteurs.

Les flotteurs sont dimensionnés pour que les périodes propres des flotteurs en roulis et tangage soient au-delà des périodes d'énergie de la houle.

La portion supérieure cylindrique 222 comporte une plateforme formant une surface plane destinée à permettre des interventions humaines ou une fixation d'appareillages nécessaires aux opérations de remorquage, d'installation, ou de maintenance par exemple.

Les flotteurs 22 comportent en outre un dispositif de cloisonnement à l'intérieur des portions supérieures et inférieures permettant d'assurer la stabilité de l'ensemble du flotteur en cas d'avarie, par exemple avec une colonne remplie d'eau.

Sur le même principe que celui de la colonne centrale 21, les flotteurs 22 comportent des compartiments aptes à être remplis au moins partiellement de ballast. Le ballast est par exemple de l'eau de mer ou un autre matériau solide, liquide ou granuleux, plus dense que l'eau de mer, permettant d'ajuster la masse de l'ensemble du système afin de régler le tirant d'eau pour des opérations à quai, des opérations de transit ou une installation sur site. Dans le cas de ballast liquide, des moyens d'ajustement adaptés sont par exemple des moyens de pompage de liquide permettant d'ajouter ou de retirer du ballast. Les compartiments destinés au ballast sont situés loin de l'axe du flotteur 22 et dans la portion inférieure afin de contribuer à la stabilité du système en augmentant son inertie en roulis et en tangage.

Dans un mode de réalisation préféré, les flotteurs 22 sont réalisés au moins partiellement en béton armé afin de résister aux sollicitations issues de l'éolienne 1, de l'environnement aquatique et de la dynamique du dispositif flottant 2.

Selon un mode de réalisation particulier, les flotteurs 22 sont réalisés au moins partiellement en acier.

De préférence, le dispositif flottant 2 comprend entre trois et huit flotteurs 22 et en particulier quatre flotteurs 22. Le nombre de flotteurs 22 est calculé pour garder un encombrement assez faible par rapport aux dispositifs flottants destinés à supporter des turbines de forte puissance et pour rester dans une plage d'inclinaison en opération et en environnement extrême compatible avec l'utilisation de turbines existantes.

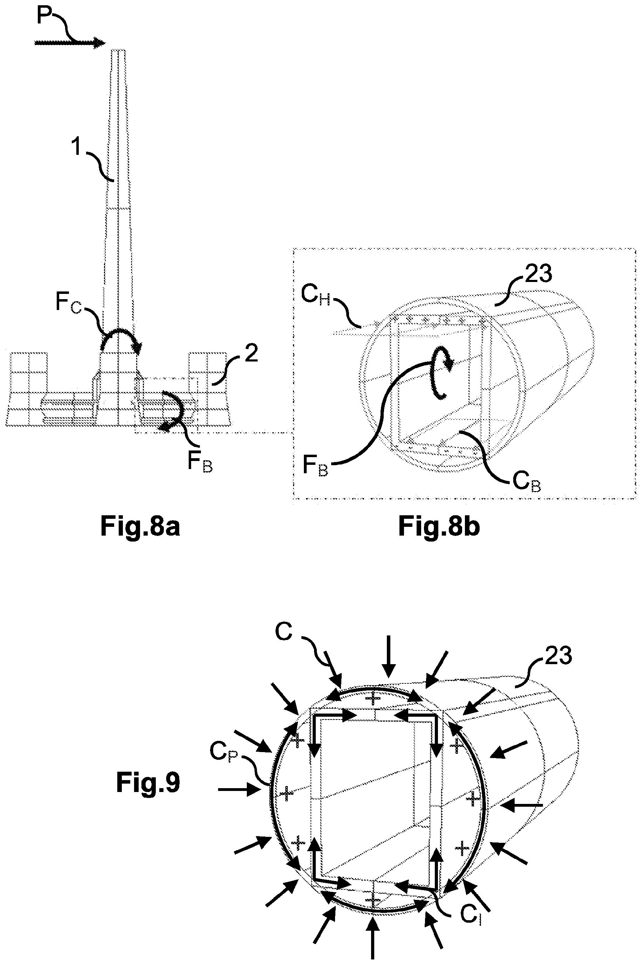

Les bras 23 s'étendent selon une direction d'élongation radiale par rapport à la colonne centrale 21 et chaque bras 23 comporte une extrémité proximale fixée à la colonne centrale 21 et une extrémité distale fixée à un flotteur 22 associé au bras 23. En référence à la figure 7, les bras 23 comportent en outre un élément tubulaire externe 231 et un élément tubulaire interne 232. Les éléments tubulaires interne et externe s'étendent selon la direction d'élongation du bras 23. L'élément tubulaire externe 231 est de section courbe, ici, circulaire perpendiculairement à la direction d'élongation. L'élément tubulaire interne 232 est de section polygonale, ici, rectangulaire perpendiculairement à la direction d'élongation. La section rectangulaire est inscrite dans la section circulaire, les sommets de la section rectangulaire étant fixés à une paroi interne de la section circulaire. La géométrie correspondant à une section rectangulaire inscrite dans une section circulaire est étudiée pour reprendre les efforts issus de la turbine et de l'environnement marin. En outre, la coque de l'élément tubulaire externe 231 et la coque de l'élément tubulaire interne 232 forment une double coque, ce qui réduit les risques d'infiltration et augmente donc la sécurité du dispositif flottant 2. L'élément tubulaire interne 232, grâce à sa section rectangulaire, permet de reprendre la flexion dans le plan, engendrée par la poussée du vent sur les pales de la turbine, et la flexion alternée dans le plan, induite par les mouvements de roulis, tangage et de pilonnement. En effet, l'élément tubulaire interne 232 de section rectangulaire comporte des dalles situées en particulier dans le prolongement d'une portion haute et dans le prolongement d'une portion basse de la section circulaire du bras 23 pour permettre d'assurer une continuité dans la transmission des efforts, notamment des moments de flexion transmis de l'éolienne 1 vers les bras 23. Les figures 8a et 8b montrent que la poussée P engendrée par la poussée P du vent sur les pales de la turbine induit un moment de flexion F_{C} au niveau de la colonne centrale 21. Le moment de flexion F_{C} dans la colonne centrale 21 se transmet sous forme de moments de flexion F_{B} dans les bras 23 présentant une direction d'élongation parallèle à la poussée P. Les moments de flexion F_{B} dans les bras sont repris sous forme de contraintes C_{H} dans la dalle de la portion haute du bras et sous forme de contraintes C_{B} dans la dalle de la portion basse du bras.

L'élément tubulaire externe 231, grâce à sa section courbe, permet de reprendre les efforts de pression externe en compression, générés par le milieu aquatique. La figure 9 montre que les efforts de pression externe en compression C sont transmis à l'élément tubulaire externe 231 sous forme de contraintes périphériques C_{P}. Les contraintes périphériques C_{P} dans l'élément tubulaire externe 231 sont ensuite transmises à l'élément tubulaire interne 232 sous forme de contraintes internes C_{I}.

En variante, la section courbe est elliptique et/ou la section polygonale est triangulaire, pentagonale ou hexagonale.

Dans un mode de réalisation préféré, les bras 23 ont une forme extérieure cylindrique de révolution.

Dans un autre mode de réalisation, les bras 23 ont une forme extérieure tronconique.

Dans un mode de réalisation préféré, les bras 23 s'étendent horizontalement. Les axes d'élongation des bras 23 sont donc coplanaires.

Dans un autre mode de réalisation, les axes d'élongation des bras 23 forment des génératrices d'un cône de révolution dont le sommet est situé sur l'axe du mât 12.

La direction d'élongation d'un bras 23 et la direction verticale définissent un plan radial. Selon un mode de réalisation préféré représenté en figure 5, le dispositif est agencé de sorte que les plans radiaux sont des plans de symétrie du dispositif. En d'autres termes, les bras 23 sont disposés en étoile autour de la colonne centrale 21 de manière régulière, c'est-à-dire que l'angle α formé par les axes d'élongation de deux bras 23 d'une paire de bras 23 successifs est le même quelle que soit la paire de bras 23 et est égal à 360° que divise le nombre total de bras 23. Cette configuration symétrique permet de garder un comportement similaire quelles que soient les orientations des perturbations environnementales, comme le vent, le courant ou la houle, de sorte à élargir le champ des sites d'installation possibles. Dans ce cas, selon un mode de réalisation particulier, la turbine comporte un actionneur asservi qui oriente la turbine en fonction de la direction du vent.

Les interfaces entre les bras 23 et la colonne centrale 21 sont situées dans des plans verticaux. A l'interface entre un bras 23 et la colonne centrale 21, la section du bras 23 est tangente à un côté du polygone que forme la face inférieure 2111 du tronc 211 de la colonne centrale 21 ; le diamètre de la section du bras 23 est inférieur ou égal à la distance entre la face inférieure 2112 et la face inférieure 2111 du tronc 211. Le tronc 211 présente, horizontalement, une section polygonale dont le nombre de côtés est égal au double du nombre de bras 23 de sorte que les bras 23 sont respectivement fixés à des côtés de la section polygonale non adjacents entre eux. Par exemple, lorsque le dispositif flottant 2 comporte quatre flotteurs 22 et donc quatre bras 23, la face inférieure 2111 et la face inférieure 2112 du tronc 211 sont octogonales.

Chaque bras 23 est fixé à la portion inférieure tronconique 221 du flotteur qui lui est associé. L'interface entre le bras 23 et la portion inférieure tronconique 221 est en gueule de loup, selon une structure classiquement utilisée dans le domaine de la tuyauterie. A l'interface entre le bras 23 et la portion inférieure tronconique 221, la section du bras 23 est tangente en partie inférieure à la base de la portion inférieure tronconique 221 et en partie supérieure à l'interface entre la portion inférieure tronconique 221 et la portion supérieure cylindrique 222. Ainsi, la transmission des efforts est assurée entre le bras 23 et la dalle constituant la base de la portion inférieure tronconique 221 et entre le bras 23 et la dalle constituant l'interface entre la portion inférieure tronconique 221 et la portion supérieure cylindrique 222.

Les bras 23 sont agencés de sorte à délimiter un volume suffisant pour avoir une flottabilité positive et sont conçus creux. Sur le même principe que celui de la colonne centrale 21 et des flotteurs 22, les bras 23 comportent des compartiments aptes à être remplis au moins partiellement de ballast. Le ballast est par exemple de l'eau de mer ou un autre matériau solide, liquide ou granuleux, plus dense que l'eau de mer, permettant d'ajuster la masse de l'ensemble du système afin de régler le tirant d'eau pour des opérations à quai, des opérations de transit ou une installation sur site. Dans le cas de ballast liquide, des moyens d'ajustement adaptés sont par exemple des moyens de pompage de liquide permettant d'ajouter ou de retirer du ballast dans lesdits compartiments.

Dans un mode de réalisation préféré, les bras 23 sont complètement immergés en opération de sorte à garantir un comportement acceptable du point de vue des mouvements et des efforts subis en conditions extrêmes, c'est-à-dire lorsque l'éolienne 1 est arrêtée et en cas de forte houle. Selon un autre mode de réalisation, les bras 23 sont partiellement immergés.

Dans un mode de réalisation préféré, les bras 23 sont réalisés au moins partiellement en béton armé pour mieux résister aux sollicitations en fatigue et aux charges extrêmes issues de la turbine 11 et de l'environnement aquatique.

Selon un mode de réalisation particulier, les bras 23 sont réalisés au moins partiellement en acier.

Les pièces de liaison 24 relient les bras 23 par paire et s'étendent horizontalement. Chaque pièce de liaison 24 comporte une première et une deuxième extrémités fixées respectivement à proximité des extrémités distales des premier et deuxième bras 23 de ladite paire de bras 23 adjacents. Les pièces de liaison 24 reliant une même paire de bras 23 sont situées dans un même plan vertical. Les pièces de liaison 24 assurent une continuité mécanique entre les bras 23 pour limiter les moments hors plan générateurs de flexion déviée. Ces pièces de liaison 24 présentent une section de petite taille par rapport aux dimensions des autres éléments.

Dans un mode de réalisation préféré, les pièces de liaison 24 sont réalisées en acier car elles travaillent principalement en traction, or l'acier résiste aux efforts de traction contrairement au béton.

Selon un mode de réalisation, le dispositif flottant 2 comporte des moyens d'arrimage. Les moyens d'arrimage sont un ensemble de lignes 30 reliant la plateforme à un élément extérieur fixe, par exemple, le fond de la masse aquatique sur laquelle flotte la plateforme. Les lignes 30 comportent une première extrémité reliée au dispositif flottant 2 en un ou plusieurs points et une deuxième extrémité reliée à l'élément extérieur fixe, par exemple par l'intermédiaire d'une ancre ou d'un corps mort. Les lignes 30 peuvent être constituées de câbles, de chaînes ou d'autres éléments souples adaptés au maintien en position d'un objet flottant soumis à des efforts de dérive sous l'effet de l'environnement. Selon des modes de réalisation particuliers, les lignes 30 sont entièrement ou partiellement tendues verticales ou obliques.

Dans une variante de réalisation, les lignes 30 sont des caténaires.

Selon un mode d'utilisation, le tirant d'eau de l'ensemble éolien flottant est faible, par exemple de l'ordre d'une dizaine de mètres non ballasté et d'une quinzaine de mètres ballasté, afin de faciliter les opérations de remorquage et d'installation.

En variante, le tirant d'eau est identique entre la phase d'installation et la phase d'opération ce qui évite les opérations de ballastage/déballastage sur le site de production. Le tirant d'eau peut néanmoins être ajusté par ballastage une fois sur le site de production.

## Revendications

1. Dispositif flottant (2) destiné à supporter une éolienne (1) en mer et comportant :
- une colonne centrale (21) flottante agencée pour recevoir fixement un mât (12) de l'éolienne (1),
- au moins trois flotteurs (22) périphériques,
- un bras (23) par flotteur, chaque bras (23) s'étendant selon une direction d'élongation radiale par rapport à la colonne centrale (21) et chaque bras (23) comportant une extrémité proximale fixée à la colonne centrale (21) et une extrémité distale fixée audit flotteur (22),
- un élément tubulaire externe (231) s'étendant selon la direction d'élongation du bras (23) et de section courbe perpendiculairement à la direction d'élongation, le dispositif flottant (2) étant **caractérisé en ce que** les bras (23) comportent :
- un élément tubulaire interne (232) s'étendant selon la direction d'élongation du bras (23) et de section polygonale perpendiculairement à la direction d'élongation, la section polygonale étant inscrite dans la section courbe.

2. Dispositif flottant (2) selon la revendication 1 **caractérisé en ce qu'**il comporte en outre au moins deux pièces de liaison (24) par paire de bras (23) adjacents, chaque pièce de liaison (24) comportant une première et une deuxième extrémités fixées respectivement à proximité des extrémités distales des premier et deuxième bras (23) de ladite paire de bras (23) adjacents.

3. Dispositif flottant (2) selon l'une quelconque des revendications précédentes **caractérisé en ce que** les bras (23) s'étendent horizontalement.

4. Dispositif flottant (2) selon l'une quelconque des revendications précédentes **caractérisé en ce que**, des plans radiaux étant définis chacun par la direction d'élongation d'un bras (23) et par une direction verticale, le dispositif flottant (2) est agencé de sorte que les plans radiaux sont des plans de symétrie du dispositif flottant (2).

5. Dispositif flottant (2) selon l'une quelconque des revendications précédentes **caractérisé en ce que** la colonne centrale (21) comporte une pièce de fixation (212) comprenant un volume creux (2120) destiné à recevoir le mât (12) de l'éolienne (1), le volume creux (2120) étant cylindrique ou tronconique de sorte à épouser la forme du mât (12).

6. Dispositif flottant (2) selon l'une quelconque des revendications précédentes **caractérisé en ce que** la colonne centrale (21) présente, horizontalement, une section polygonale dont le nombre de côtés est égal au double du nombre de bras (23) de sorte que les bras (23) sont respectivement fixés à des côtés de la section polygonale non adjacents entre eux.

7. Dispositif flottant (2) selon l'une quelconque des revendications précédentes **caractérisé en ce que** les flotteurs (22) comportent une portion inférieure tronconique (221) d'axe vertical et une portion supérieure cylindrique (222) d'axe vertical.

8. Dispositif flottant (2) selon l'une quelconque des revendications précédentes **caractérisé en ce qu'**il est réalisé, au moins partiellement, en béton armé.

9. Dispositif flottant (2) selon l'une quelconque des revendications précédentes **caractérisé en ce qu'**il comporte des portions en acier.

10. Ensemble éolien flottant comportant :
- un dispositif flottant (2) selon l'une quelconque des revendications précédentes, et
- une éolienne (1).

## Patentansprüche

1. Schwimmende Vorrichtung (2), die dazu bestimmt ist, eine Offshore-Windkraftanlage (1) zu tragen, und aufweist:
- eine schwimmende Mittelsäule (21), die eingerichtet ist, um einen Mast (12) der Windkraftanlage (1) ortsfest aufzunehmen,
- mindestens drei periphere Schwimmer (22),
- einen Arm (23) pro Schwimmer, wobei jeder Arm (23) sich gemäß einer radialen Ausdehnungsrichtung bezüglich der Mittelsäule (21) erstreckt, und jeder Arm (23) ein an der Mittelsäule (21) befestigtes proximales Ende und ein am Schwimmer (22) befestigtes distales Ende aufweist,
- ein äußeres rohrförmiges Element (231), das sich gemäß der Ausdehnungsrichtung des Arms (23) erstreckt und einen gebogenen Querschnitt lotrecht zur Ausdehnungsrichtung hat,
wobei die schwimmende Vorrichtung (2) **dadurch gekennzeichnet ist, dass** die Arme (23) aufweisen:
- ein inneres rohrförmiges Element (232), das sich gemäß der Ausdehnungsrichtung des Arms (23) erstreckt und einen polygonalen Querschnitt lotrecht zur Ausdehnungsrichtung hat, wobei der polygonale Querschnitt innerhalb des gebogenen Querschnitts liegt.

2. Schwimmende Vorrichtung (2) nach Anspruch 1, **dadurch gekennzeichnet, dass** sie außerdem mindestens zwei Verbindungsbauteile (24) pro Paar von benachbarten Armen (23) aufweist, wobei jedes Verbindungsbauteil (24) ein erstes und ein zweites Ende aufweist, die je in der Nähe der distalen Enden der ersten und zweiten Arme (23) des Paars von benachbarten Armen (23) befestigt sind.

3. Schwimmende Vorrichtung (2) nach einem der vorhergehenden Ansprüche, **dadurch gekennzeichnet, dass** die Arme (23) sich waagrecht erstrecken.

4. Schwimmende Vorrichtung (2) nach einem der vorhergehenden Ansprüche, **dadurch gekennzeichnet, dass**, wenn radiale Ebenen je durch die Ausdehnungsrichtung eines Arms (23) und durch eine senkrechte Richtung definiert sind, die schwimmende Vorrichtung (2) so eingerichtet ist, dass die radialen Ebenen Symmetrieebenen der schwimmenden Vorrichtung (2) sind.

5. Schwimmende Vorrichtung (2) nach einem der vorhergehenden Ansprüche, **dadurch gekennzeichnet, dass** die Mittelsäule (21) ein Befestigungsbauteil (212) aufweist, das ein Hohlvolumen (2120) enthält, das dazu bestimmt ist, den Mast (12) der Windkraftanlage (1) aufzunehmen, wobei das Hohlvolumen (2120) zylindrisch oder kegelstumpfförmig ist, um sich an die Form des Masts (12) anzupassen.

6. Schwimmende Vorrichtung (2) nach einem der vorhergehenden Ansprüche, **dadurch gekennzeichnet, dass** die Mittelsäule (21) waagrecht einen polygonalen Querschnitt aufweist, dessen Anzahl von Seiten gleich dem Doppelten der Anzahl von Armen (23) ist, so dass die Arme (23) je an Seiten des polygonalen Querschnitts befestigt sind, die einander nicht benachbart sind.

7. Schwimmende Vorrichtung (2) nach einem der vorhergehenden Ansprüche, **dadurch gekennzeichnet, dass** die Schwimmer (22) einen kegelstumpfförmigen unteren Abschnitt (221) mit senkrechter Achse und einen zylindrischen oberen Abschnitt (222) mit senkrechter Achse aufweisen.

8. Schwimmende Vorrichtung (2) nach einem der vorhergehenden Ansprüche, **dadurch gekennzeichnet, dass** sie zumindest teilweise aus Stahlbeton hergestellt ist.

9. Schwimmende Vorrichtung (2) nach einem der vorhergehenden Ansprüche, **dadurch gekennzeichnet, dass** sie Abschnitte aus Stahl aufweist.

10. Schwimmende Windkrafteinheit, die aufweist:
- eine schwimmende Vorrichtung (2) nach einem der vorhergehenden Ansprüche und
- eine Windkraftanlage (1).

## Claims

1. Floating device (2) for supporting an offshore wind turbine (1) and comprising:
- a central floating pillar (21) arranged for fixedly receiving a tower (12) of the wind turbine (1),
- at least three peripheral floaters (22),
- one leg (23) per floater, each leg (23) extending in a radial longitudinal direction in relation to the central pillar (21) and each leg (23) comprising a proximal end that is secured to the central pillar (21) and a distal end that is secured to said floater (22),
an outer tubular element (231) which extends in the longitudinal direction of the leg (23) and has a curved cross-section perpendicularly to the longitudinal direction, the floating device (2) being **characterised in that** the legs (23) comprise:
- an inner tubular element (232) which extends in the longitudinal direction of the leg (23) and has a polygonal cross-section perpendicularly to the longitudinal direction, the polygonal cross-section being inscribed in the curved cross-section.

2. Floating device (2) according to claim 1 **characterised in that** it further comprises at least two connection parts (24) per pair of adjacent legs (23), each connection part (24) comprising a first and a second ends secured respectively in the vicinity of the distal ends of the first and second legs (23) of said pair of adjacent legs (23).

3. Floating device (2) according to any preceding claim **characterised in that** the legs (23) extend horizontally.

4. Floating device (2) according to any preceding claim **characterised in that**, radial planes being each defined by the longitudinal direction of a leg (23) and by a vertical direction, the floating device (2) is arranged in such a way that the radial planes are planes of symmetry of the floating device (2).

5. Floating device (2) according to any preceding claim **characterised in that** the central pillar (21) comprises a securing part (212) comprising a hollow volume (2120) for receiving the tower (12) of the turbine (1), the hollow volume (2120) being cylindrical or truncated in such a way as to hug the shape of the tower (12).

6. Floating device (2) according to any preceding claim **characterised in that** the central pillar (21) has, horizontally, a polygonal cross-section of which the number of sides is equal to double the number of legs (23) in such a way that the legs (23) are respectively secured to sides of the polygonal cross-section that are not adjacent between them.

7. Floating device (2) according to any preceding claim **characterised in that** the floaters (22) comprise a truncated lower portion (221) with a vertical axis and a cylindrical upper portion (222) with a vertical axis.

8. Floating device (2) according to any preceding claim **characterised in that** it is made, at least partially, of reinforced concrete.

9. Floating device (2) according to any preceding claim **characterised in that** it comprises portions made of steel.

10. Floating wind turbine unit comprising:
- a floating device (2) according to any preceding claim, and
- a wind turbine (1).
